# EUROPEAN PATENT SPECIFICATION

(11) **EP 2 341 632 B1**
(45) Date of publication and mention of the grant of the patent: **29.01.2014**
(21) Application number: 11159323.2
(22) Date of filing: 13.08.2008
(51) Int. Cl.: H04B 1/40, H04B 17/00

(54) **Wireless device having fast-receive mode for measuring received signal strength (RSSI) for higher time division multiple access (TDMA) multislot classes**
Drahtlose Vorrichtung mit schnellem Empfangsmodus zur Messung der Stärke des Empfangssignals (RSSI) für höhere Time Division Multiple Access (TDMA) Klassen mit mehreren Schlitzen
Dispositif sans fil disposant d'un mode de réception rapide pour mesurer la force d'un signal reçu (RSSI) pour des classes plus élevées à plusieurs intervalles de temps d'accès multiple de division de temps (TDMA)

(43) Date of publication of application: 06.07.2011
(62) Divisional of application: 08162333.2
(73) Proprietor: BlackBerry Limited, Waterloo, ON N2K 0A7 (CA)
(72) Inventor: Tran, Phat Hong, Waterloo Ontario N2K 4A7 (CA); Kravets, Oleksiy, Kitchener Ontario N2E 3Z8 (CA)
(74) Representative: Patel, Binesh

(56) References cited:
- US-A1- 2004 001 531
- US-B1- 6 757 261

## Description

The present technology relates generally to wireless communications and, more particularly, to wireless communications that utilize time division multiple access (TDMA).

Received Signal Strength Indication (RSSI) is a measurement of the power present in a received radio signal. The RSSI measurements are used by a wireless communications device to determine the signal strengths of radio signals emanating from base stations in the vicinity of the device. The RSSI measurements enable the device to ascertain which base station is currently providing the optimal wireless link and when to perform a handover from one base station to another.

In a typical time division multiple access (TDMA) radio-access technology (RAT) implementation, such as GSM/GPRS/EDGE, at least one RSSI measurement is made per frame for voice calls or data transfer. Thus, for a GSM-based implementation, since each GSM frame has only 8 timeslots, an RSSI measurement must be scheduled within one or more of the timeslots. Where only a single downlink slot and a single uplink slot are used, there is generally no problem scheduling at least one RSSI measurement per GSM frame.

However, GPRS/EGPRS wireless devices and mobile phones may utilize multislot classes. This technology enables more than one downlink timeslot or more than one uplink timeslot per frame. A multislot class can have a value between 1 and 45. For example, a class 10 multislot device, which is currently quite prevalent, uses a maximum of 4 timeslots in the downlink direction and 2 timeslots in the uplink direction. However, the total number of timeslots per frame may not, for class 10, exceed 5. Thus, the network configures either 4 Rx + 1 Tx or 3 Rx + 2 Tx (meaning 4 downlink slots plus 1 uplink slot, or 3 downlink slots plus 2 uplink slots). Multislot classes with a class rating of 31 or higher are deemed to be high (or "higher") multislot classes. These higher multislot classes are to utilize 6 or 7 timeslots per frame for either uplink or downlink. For example, a multislot class 32 would employ 5 downlink slots and 3 uplink slots with a maximum of 6 timeslots.

In these higher multislot classes, however, there is generally insufficient space to perform an RSSI measurement because of the substantial time required to stabilize the phase-locked loop of the receiver. One inadequate solution would be to implement a highly advanced and expensive PLL design in the device; however, this is not cost-effective for consumer wireless devices. Another solution would be to employ more than one receiver, but the use of an extra transceiver chip is not only expensive but also adds unwanted bulk to the device. For Evolved EDGE, which will require a second receiver, operating both receivers consumes more power than would be desirable. There is therefore a need for a solution to one or more of the foregoing problems.

US 6757261 discloses a GSM transceiver using time division multiplex in which multiple data registers are used to store the phase lock loop frequency control data.

US 2004/001531 discloses a frequency hopping spread spectrum transceiver. The transmitter communicates a preamble over a number of preamble channels, and thereafter communicate groups of data bytes that each comprise a subset of the data message over a predetermined sequence of data channels. The receiver investigates the predetermined number of preamble channels to search for the preamble and tests the received bits to ensure that the preamble and a start frame delimiter have been properly received to synchronise the receiver with the transmitter.

### GENERAL

In general, the present technology may enable a wireless communications device to utilize higher TDMA multislot classes without requiring a second receiver or without requiring that the transceiver chip implement an advanced and expensive phase-locked loop (PLL) design. The wireless communications device may implement higher TDMA multislot classes by reducing the time required to complete a received signal strength indication (RSSI) measurement. The time required to complete an RSSI measurement may be reduced by initiating the collection of RSSI signal samples prior to complete stabilization of the PLL. The wireless communications device can thus operate in two distinct receiver modes, a normal receive mode in which the TDMA data is received and a fast receive mode (or dedicated, lower-power RSSI measurement mode) in which the device does not wait for the PLL to stabilize prior to commencing the collection of signal strength samples. By performing the steps of PLL stabilization and signal sample collection substantially in parallel, or at least partially in parallel, the total time required for measuring RSSI can be reduced to an amount that can be fitted (i.e. scheduled) within the remaining space available in one of the timeslots of the frame. This novel technique may enable the device to receive data in one mode while measuring RSSI in another mode. Even if the receiver is not exactly on-frequency during the RSSI measurement, a useful signal strength reading can nonetheless be obtained.

Thus, one aspect of the present technology may be a method of transmitting and receiving data using a wireless communications device that is enabled for higher multislot classes in which a plurality of uplink timeslots of each TDMA frame is reserved for transmitting data and a plurality of downlink timeslots of each TDMA frame is reserved for receiving data. This novel method may comprise steps of receiving TDMA data on at least one of the plurality of downlink timeslots reserved for receiving data, switching a transceiver of the wireless communications device from a receiver mode to a transmitter mode, transmitting TDMA data on at least one of the plurality of uplink timeslots reserved for transmitting data, switching the transceiver of the wireless communications device from the transmitter mode to the receiver mode, and measuring, with the transceiver operating in the receiver mode, a received signal strength indication (RSSI) by initiating collection of RSSI signal samples prior to complete stabilization of a phase-locked loop (PLL) of the transceiver.

In one implementation the step of measuring the RSSI may comprise steps of programming the transceiver for the receiver mode, initiating stabilization of the PLL, initiating collection of RSSI signal samples while the PLL is still stabilizing, and terminating the receiver mode when a maximum number of RSSI signal samples have been collected, wherein the maximum number of RSSI signal samples is constrained by a remaining space available in a timeslot during which the RSSI is to be measured.

In another implementation the step of measuring the RSSI may comprise initiating collection of RSSI signal samples once the phase-locked loop has stabilized the frequency of a local oscillator to within, for example, 20 kHz of the carrier frequency. It will be appreciated that this 20 kHz value is only presented by way of illustration, and any other suitable frequency differential could be used based on the specific parameters of the device.

In yet another implementation the step of measuring the RSSI may comprise initiating collection of RSSI signal samples once the phase-locked loop has stabilized the frequency of a local oscillator to within, for example, 10 kHz of the carrier frequency. It will be appreciated that this 10 kHz value is only presented by way of illustration, and any other suitable frequency differential could be used based on the specific parameters of the device.

Another main aspect of the present technology may be a computer program product that includes code adapted to perform the steps of any of the foregoing methods when the computer program product is loaded into memory and executed on a processor of a wireless communications device.

Yet another main aspect of the present technology may be a wireless communications device enabled for higher multislot classes in which a plurality of uplink timeslots of each TDMA frame is reserved for transmitting data and a plurality of downlink timeslots of each TDMA frame is reserved for receiving data. The device may comprise a radiofrequency transceiver having a phase-locked loop for locking the phase of a local oscillator of the transceiver to the phase of a carrier signal, and a processor for instructing the radiofrequency transceiver to switch between a normal data-receiving mode in which TDMA data is received on reserved downlink slots and a dedicated RSSI-measurement mode for measuring a received signal strength indication (RSSI) wherein collection of RSSI signal strength samples is initiated prior to complete stabilization of the phase-locked loop.

In one implementation each TDMA frame may have eight timeslots of which at least six timeslots are reserved for either data transmission or data reception.

In another implementation each TDMA frame may have eight timeslots of which at least seven timeslots are reserved for either data transmission or data reception.

In yet another implementation the radiofrequency transmitter may operate at a lower power when operating in the dedicated RSSI measurement mode.

### BRIEF DESCRIPTION OF THE DRAWINGS

Further features and advantages of the present technology will become apparent from the following detailed description, taken in combination with the appended drawings, in which:

FIG. 1 is a schematic depiction of a wireless network and a wireless communications device on which the present technology can be implemented;

FIG. 2 is a flowchart outlining some of the main steps of a method of enabling a wireless communications device to implement higher TDMA multislot classes in accordance with one or more implementations of the present technology;

FIG. 3 is a flowchart depicting some of the specific steps involved in switching over from one mode to another mode;

FIG. 4 is a flowchart depicting some of the specific steps involved in measuring the RSSI;

FIG. 5 is a schematic depiction of an eight-timeslot GSM frame;

FIG. 6 is a schematic depiction of the GSM frame of FIG. 5 configured for a 4 Rx + 2 Tx multislot class;

FIG. 7 is a schematic depiction of a novel technique of initiating RSSI sampling prior to complete stabilization of the PLL;

FIG. 8 is a schematic depiction of the prior art approach of serially stabilizing the PLL prior to initiating the sampling of the signal strength;

FIG. 9 is a graph schematically illustrating the stabilization of a PLL as a function of time;

FIG. 10 is a schematic depiction of a technique of initiating sampling at a time t1 that is prior to a time ts corresponding to complete stabilization of the PLL;

FIG. 11 is a schematic depiction of a technique of initiating sampling at a time t2 that is prior to a time ts corresponding to complete stabilization of the PLL;

FIG. 12 is a schematic circuit diagram of the RF receiver, A/D converter and DSP used for obtaining RSSI measurements and TDMA data; and

FIG. 13 is a schematic circuit diagram of the RF transceiver chip showing the presence of local oscillators having respective phase-locked loops.

It will be noted that throughout the appended drawings, like features are identified by like reference numerals.

### DESCRIPTION OF PREFERRED EMBODIMENTS

The details and particulars of the various aspects of the technology will now be described below, by way of example, with reference to the attached drawings.

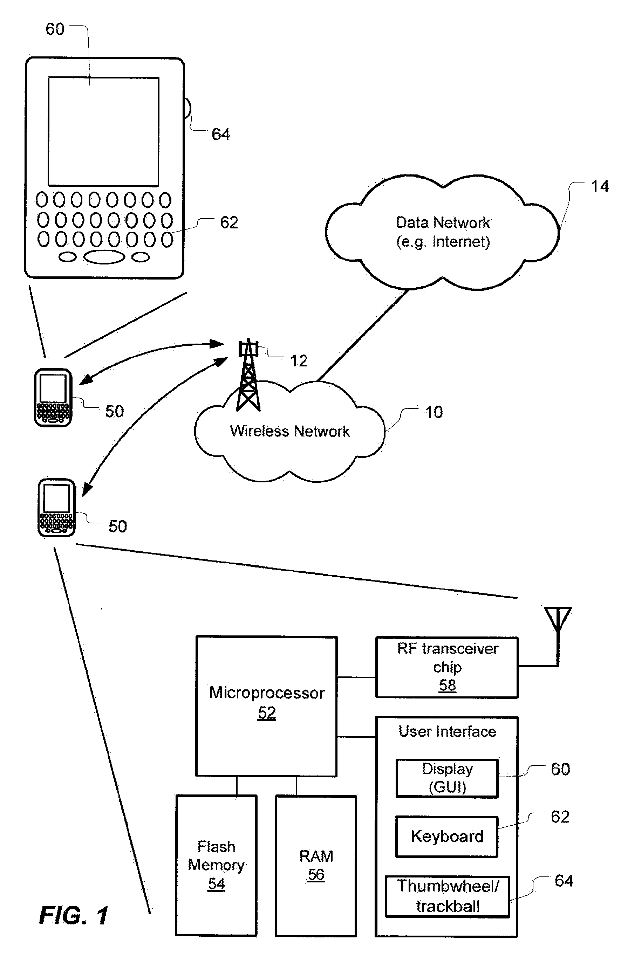

FIG. 1 is a schematic depiction of a wireless network and a wireless communications device on which the present technology can be implemented.

For the purposes of this specification, the expression "wireless communications device" is meant to encompass a broad range of portable or mobile communication devices such as smart phones, cell phones, satellite phones, wireless-enabled PDA's or wireless-enabled Pocket PCs or tablets, and any other device that is capable of exchanging data over a radiofrequency channel or wireless link.

FIG. 1 depicts schematically a wireless network 10 which, in this case, is a TDMA-based mobile communications network such as a GSM network. The wireless network 10 has at least one base station tower 12 for communicating over radio frequencies with a wireless communications device 50. The wireless network 10 may also be connected to a data network such as, for example, the Internet through which the wireless communications device 50 can exchange and obtain data. The wireless communications device 50 may have both voice and data capabilities (optionally for both e-mail and Web browsing) The wireless communications device 50 includes a processor or microprocessor 52 that is operatively coupled to memory (e.g. Flash Memory 54 and RAM 56) and a radiofrequency transceiver (e.g. the RF transceiver circuitry or RF chip 58) for transmitting and receiving voice and data. Furthermore, the wireless communications device may include a display or graphical user interface 60, e.g. an LCD screen, a keyboard/keypad 62 and an optional thumbwheel or trackball 64.

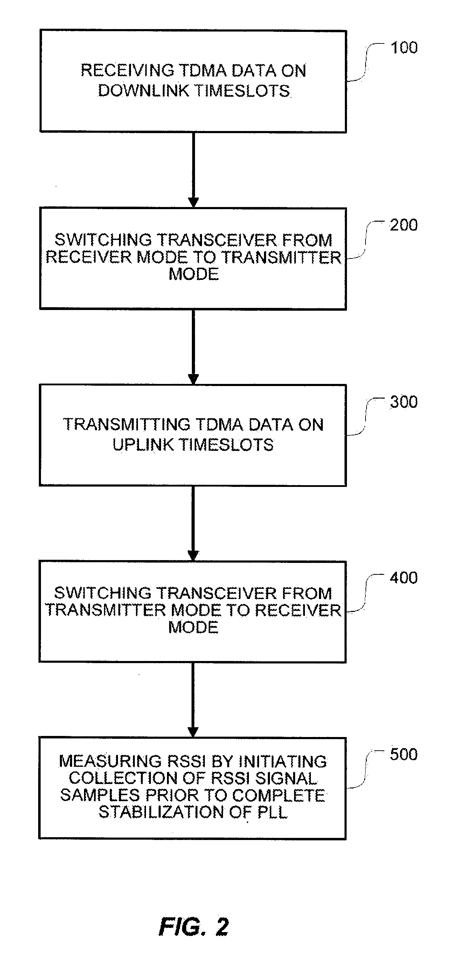

FIG. 2 is a flowchart outlining some of the main steps of a method of enabling a wireless communications device to implement higher TDMA multislot classes in accordance with one or more implementations of the present technology. This novel method enables the transmitting and receiving of data using a wireless communications device that is enabled for higher multislot classes in which a plurality of uplink timeslots of each TDMA frame is reserved for transmitting data and a plurality of downlink timeslots of each TDMA frame is reserved for receiving data. As depicted in FIG. 2, the novel method generally involves a step 100 of receiving TDMA data on at least one of the plurality of downlink timeslots reserved for receiving data. The method further includes a step 200 of switching a transceiver of the wireless communications device from a receiver mode to a transmitter mode. The method also includes a step 300 of transmitting TDMA data on at least one of the plurality of uplink timeslots reserved for transmitting data. The method further includes a step 400 of switching the transceiver of the wireless communications device from the transmitter mode to the receiver mode. The method further involves a step 500 of measuring, with the transceiver operating in the receiver mode, a received signal strength indication (RSSI) by initiating collection of RSSI signal samples prior to complete stabilization of a phase-locked loop (PLL) of the transceiver.

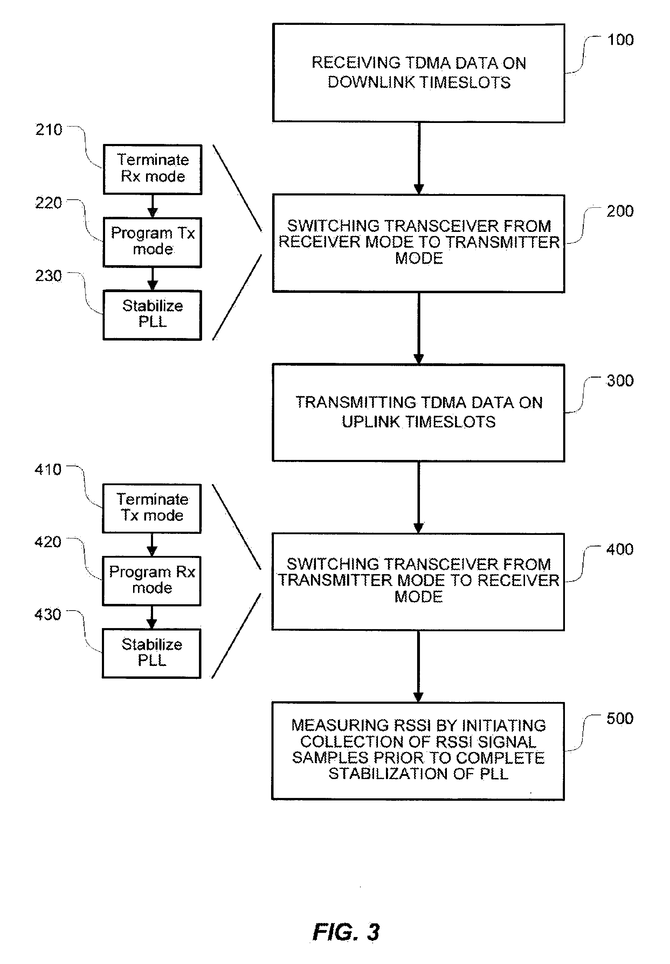

In one implementation of this technology, as depicted in FIG. 3, the step 200 of switching the transceiver from the receiver mode to the transmitter mode entails a step 210 of terminating the receiver mode, a step 220 of programming the transceiver for the transmitter mode, and a step 230 of stabilizing the PLL for the transmitter mode.

In one implementation of this technology, as further depicted in FIG. 3, the step 400 of switching the transceiver from the transmitter mode to the receiver mode entails a step 410 of terminating the transmitter mode, a step 420 of programming the transceiver for the receiver mode, and a step 430 of stabilizing the PLL for the receiver mode.

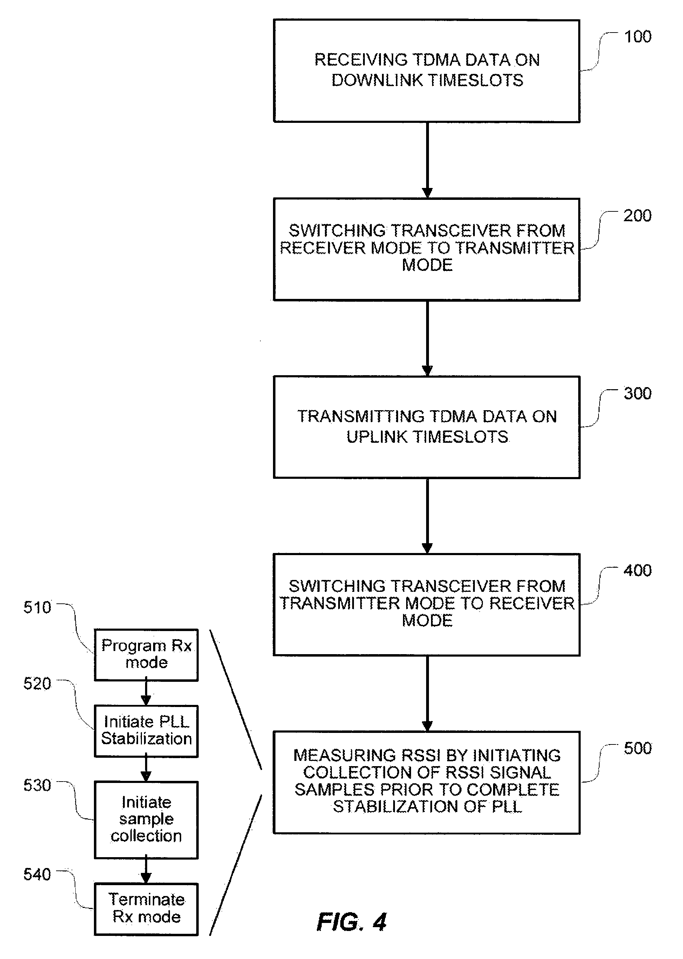

In one implementation of this technology, as depicted in FIG. 4, the step of measuring the received signal strength indication (RSSI) entail a step 510 of programming the transceiver for the receiver mode, a step 520 of initiating stabilization of the PLL, a step 530 of initiating collection of RSSI signal samples while the PLL is still stabilizing, and a step 540 of terminating the receiver mode when a maximum number of RSSI signal samples have been collected, wherein the maximum number of RSSI signal samples is constrained by a remaining space available in a timeslot during which the RSSI is to be measured.

In one specific implementation, the step 500 of measuring the received signal strength indication (RSSI) comprises initiating collection of RSSI signal samples once the phase-locked loop has stabilized the frequency of a local oscillator to within 20 kHz of the carrier frequency. In a variant of this implementation, the onset of sample collection can be deferred until the local oscillator has stabilized to within 10 kHz of the carrier frequency. These values, it should be appreciated, are provided merely by way of example to illustrate an approximate frequency differential (or "error") that can be tolerated for the purposes of initiating collection of signal strength samples. By initiating collection of RSSI samples before the PLL associated with the local oscillator has fully stabilized, a substantially more rapid RSSI measurement can be obtained, thus enabling the RSSI measurement to be scheduled in the remaining space in a given timeslot. Since the RSSI measurement can be scheduled in the space remaining in one of the timeslots of the frame, the higher multislot classes can be implemented. This novel technique enables higher multislot classes to be implemented without resorting to the undesirably expensive solution of utilizing a very advanced PLL design or using a second receiver. Use of a second transceiver chip not only increases cost but also augments the "silicon space" inside the device (thus increasing the overall bulk of the device). For a mobile device, where both low cost and small size are paramount concerns, this is clearly disadvantageous. In contrast, the present technology enables the device to use higher multislot classes with a standard PLL design and only a single transceiver chip (i.e. only one receiver). Even for Evolved EDGE devices, where a second receiver is mandated by the standard, this novel technology is useful because the second receiver can either be shut off or powered down to thereby reduce power consumption and thus prolong battery life.

Since RSSI measurements are done at least once every frame, the timing analysis presented below by way of example illustrates why an RSSI measurement cannot be scheduled into a typical eight-slot GSM frame in the case of higher multislot classes.

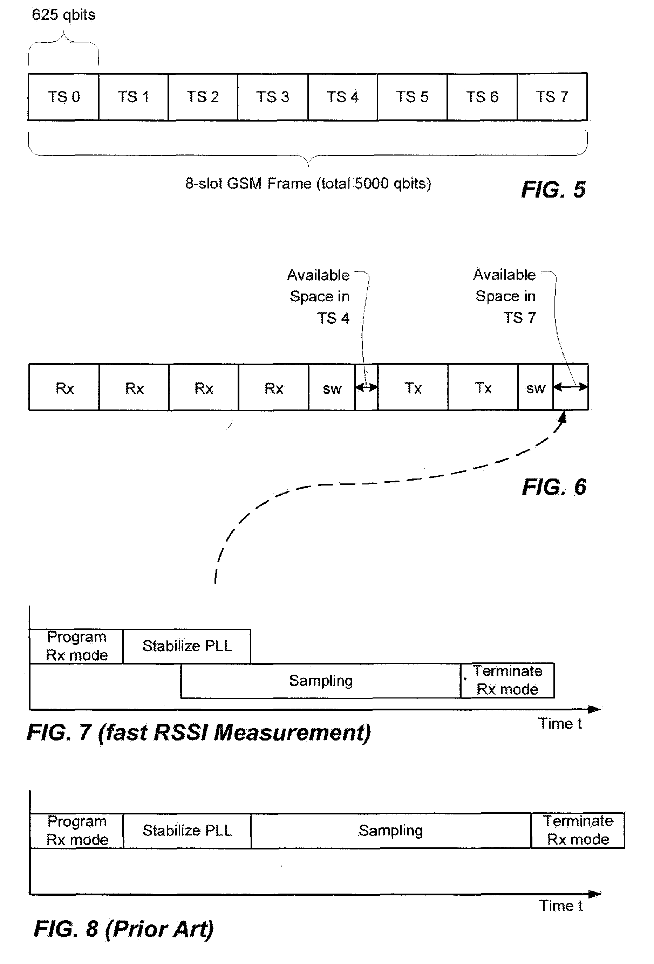

As shown in FIG. 5, the duration of the 8-slot GSM frame is calculated as follows: 8 time slots * 625 GSM quarter bits (qbits) per slot = 5000 qbits. For the purposes of illustration, an example calculation is presented below for a typical class 10 implementation having 4 downlink timeslots and 2 uplink timeslots. The qbit values are presented merely by way of example to illustrate the underlying principle that (when using the prior-art approach) there is inadequate space available for performing an RSSI measurement in one of the timeslots of the frame. It should of course be understood that these values may vary depending on the particular attributes of the network and on the characteristics of the transceiver in the wireless communications device.

As shown in FIG. 6, yn the worst case frame structure for the 4 timeslots used for downlink data, 2 timeslots used for uplink data and 1 RSSI measurement, the timeslots would be occupied as follows:
1. Slots 0-3 occupied by 4 downlink slots (Rx).
2. Slot 4:
   a) terminating Rx mode (114 qbits);
   b) potential space (1) for RSSI (625 - (114+98+222) = 191 qbits);
   c) programming radio transceiver for uplink (Tx) operation (98 qbits);
   d) stabilizing (settling) radio transceiver in uplink (Tx) mode (PLL stabilization , etc.) (222 qbits)
3. Slots 5,6 occupied by 2 uplink slots (Tx).
4. Slot 7:
   a) terminating Tx mode (39 qbits);
   b) potential space (2) for RSSI (625 - (39+100+118) = 368 qbits)
   c) programming radio transceiver for next frame downlink operation (next frame slots 0-3 Rx) (100 qbits)
   d) stabilizing radio transceiver in downlink (Rx) mode (PLL stabilization, etc.) (118 qbits)

It bears underscoring that the foregoing values are merely presented by way of example to illustrate the underlying principle.

In this particular example, the time required for performing one (1) RSSI measurement can be calculated as follows:
1. Programming the radio transceiver for the Rx mode (100 qbits)
2. Stabilizing the radio transceiver in the downlink (Rx) mode (PLL stabilization, etc.) (118 qbits)
3. Receiving 100 samples for RSSI calculation (400 qbits)
4. Terminating the Rx mode (114 qbits)

In this specific example, the total number of quarter bits needed to perform one RSSI calculation is equal to 732 qbits. This is problematic since there are only 368 qbits of space available in this example. Thus, in this example, it is not possible to schedule an RSSI measurement into this GSM frame. Again, it should be understood that these values are presented merely by way of example. The values may vary depending on the specific attributes of the network and the specific characteristics of the transceiver in the wireless device.

Using the novel technology described herein, however, it is possible to fit an RSSI measurement into this typical right-timeslot GSM frame. To fit the RSSI measurement into the available space remaining in one of the timeslots of the frame, the total time needed to measure RSSI is reduced. As depicted schematically in FIG. 7, the total time needed for an RSSI measurement is reduced by initiating the collection of signal samples prior to complete stabilization of the phase-locked loop (PLL) of the receiver. In other words, the wireless communications device begins to collect signal strength (RSSI) samples and sent these collected samples to a digital signal processor (DSP) prior to complete stabilization of the PLL. Thus, the step of PLL stabilization occurs at least partially in parallel with the step of signal strength sample collection. By at least partially overlapping the sample collection and the PLL stabilization, the total time required for an RSSI measurement is significantly reduced. In contradistinction, in the prior art, the steps of programming the Rx mode, stabilizing the PLL, sampling and termination of the Rx mode were performed serially, i.e. in a non-overlapping sequence, as shown schematically in FIG. 8.

The processor of the wireless device can be configured to cause the radiofrequency transceiver to collect a maximum number of RSSI signal samples, where the maximum number is constrained by the remaining space available in a timeslot during which RSSI is measured. In other words, if the remaining space in a given timeslot is x qbits, then the processor can be configured to collect the maximum number of samples so that all of the space in that timeslot is used for switchover from Tx mode to Rx (or vice versa), which is governed by transceiver properties, and the RSSI measurement. Thus, the RSSI measurement can be made as long as possible (to improve accuracy) by sampling for as long as possible, even if the PLL has only begun to stabilize.

As will be appreciated, there is an engineering trade-off between the time reduction and the accuracy of the resulting RSSI measurement. By reducing the total time required to measure RSSI by collecting samples without waiting for full PLL stabilization to occur, the initial sampling tends to be inaccurate (although this sampling, of course, become increasingly more accurate as the PLL stabilizes). Since the PLL converges or "decays" toward stabilization, samples collected at the very beginning are least accurate. As time progresses and the PLL stabilizes, the inaccuracy of the sampling decreases until the samples become reasonably accurate, at least for the purposes of measuring or estimating the RSSI. Even being off-frequency by, for example, 10-20 kHz is sufficient for getting a useful RSSI reading.

Determining when to initiate sample collection can be accomplished in different ways. One approach is to determine how much space is available in a given timeslot in which the RSSI is to be measured, and then to work backward to determine, based on how many samples are needed, when to begin sample collection. Another approach is to commence the collection of samples at a fixed point in the timeslot, e.g. at the midpoint of the timeslot, in which case only a fixed number of samples will ever be collected, and therefore the RSSI measurement will only be based on that set of samples. A "time lag" between initiation of stabilization and initiation of sample collection can thus be defined. This time lag can optionally be made a configurable parameter.

Another approach is to initiate sample collection as soon as PLL stabilization has progressed beyond a predetermined threshold, i.e. when the PLL output frequency is reasonably close to the target frequency, and then to employ an algorithm that takes into account the increasing accuracy of the sampling as the PLL converges/stabilizes.

In yet another approach, the time to stabilize the PLL to within 10 kHz or 20 kHz (or some other arbitrary frequency differential) of the carrier frequency can be determined *a priori* and then used to determines how many samples to collect. The device would then collect x samples representing 4x qbits where x = ((625 qbits per timeslot) - (time required for switching from the transmitter mode to the receiver mode) - (time to program the transceiver for RSSI measurement in the receiver mode) - (time to stabilize the PLL to within 20 kHz of the carrier frequency) - (time to terminate the receiver mode once RSSI measurement is complete))/4. This calculation would be used if the designated timeslot for performing the RSSI measurement is Timeslot #7 (the eighth timeslot) in the 4 Rx + 2 Tx multislot example presented above.

Alternatively, the value of x can be determined as x = ((625 qbits per timeslot) - (time required for switching from the receiver mode to the transmitter mode) - (time to program the transceiver for RSSI measurement in the receiver mode) - (time to stabilize the PLL to within 20 kHz of the carrier frequency) - (time to terminate the receiver mode once RSSI measurement is complete))/4. This calculation would be used if the designated timeslot for performing the RSSI measurement is Timeslot #4 (the fifth timeslot) in the 4 Rx + 2 Tx multislot example presented above. As was the case in the specific example presented above, it will often be the case that one of the two timeslots offers more available space than the other one, and is thus the prime candidate for scheduling the RSSI measurement. If, by happenstance, the Rx-Tx switchover time is the same as the Tx-Rx switchover time, then the available space in the two potentially usable timeslots is identical, and it therefore becomes merely a matter of design choice as to which one to employ. For even higher multislot classes where there are seven (7) timeslots devoted to data transmission and reception and thus only one (1) timeslot potentially available for RSSI, then no comparison is required. Depending on whether the available timeslot follows the Tx mode or the Rx mode, the appropriate calculation is used to determine how many samples can be collected (assuming the latter approach of initiating sampling only once the PLL has converged to within a predetermined frequency differential).

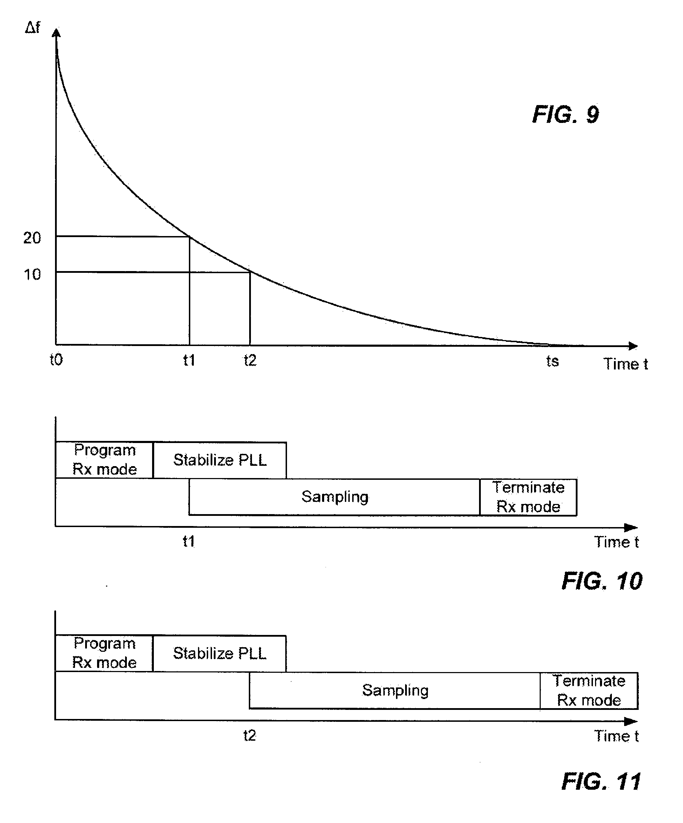

FIG. 9 is a graphical depiction of the stabilization of the PLL over time. In this graph, a frequency differential of 20 kHz (or other arbitrary value) corresponds to time t1 whereas a frequency differential of 10 kHz (or other arbitrary value) corresponds to time t2. Time ts corresponds to the complete stabilization time. In this novel technique, sampling begins prior to ts, such as, for example, at t1 or at t2. Below FIG. 9 are two time-based bar graphs (FIG. 10 and FIG. 11) showing that the sampling is at least partially in parallel with the PLL stabilization. Indeed, it is possible to commence sampling as soon as the PLL output frequency closes in on the target frequency.

This novel method therefore employs a dedicated low-power receive mode (distinct from the normal receive mode) for measuring the received signal strength indication (RSSI). This dedicated low-power receive mode (also referred to herein as a fast receive mode) eliminates the need to set up the receiver in a normal receive mode for measuring RSSI, which is too time-consuming to fit within the available space in the timeslot. Thus, the method switches the transceiver on the wireless device between a normal receive mode for receiving TDMA data and a fast receive mode for performing the RSSI measurement.

This novel technology enables implementation of the 4-2 multislot class (4 downlink and 2 uplink) in EDGE (Enhanced Data rates for GSM Evolution) and can also be used to implement higher multislot classes in which six or seven of the eight timeslots of the GSM frame are used for either uplink (data transmission) or downlink (data reception). As noted earlier, this novel technology obviates the need for incorporating an additional receiver or using an advanced and expensive PLL design.

Not only does this technology provide a faster setup time for a dedicated RSSI receive mode, it also reduces power consumption and thus preserves battery life. In other words, this new technology eliminates the need to set up a high-power receive mode that is normally needed to measure RSSI using the traditional approach.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the handheld electronic device.

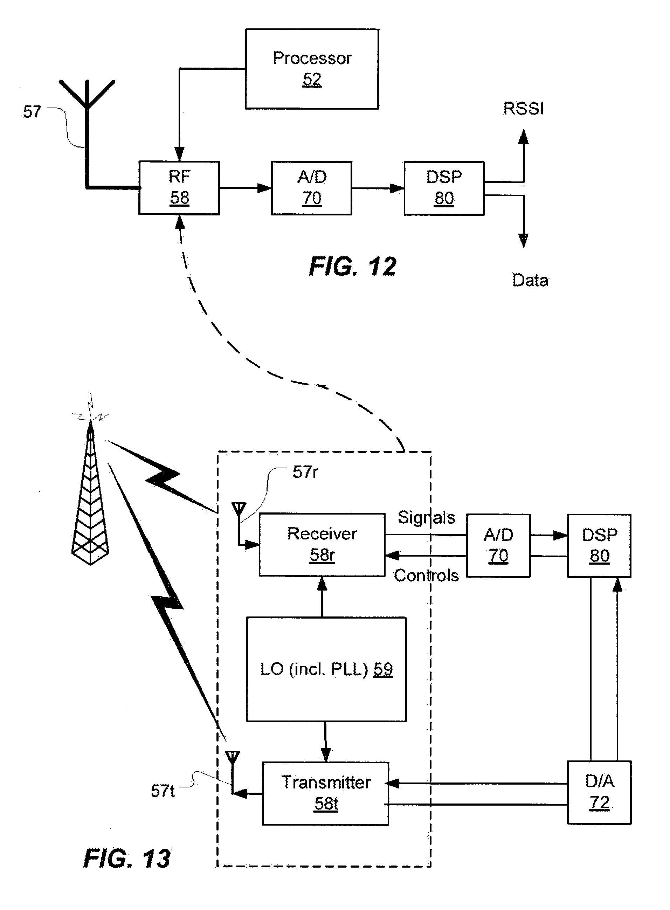

FIG. 12 depicts a simplified schematic circuit diagram showing how the processor 58 of the wireless device can be used to switch the RF chip 58 between a normal receive mode and a fast receive mode (i.e. a dedicated RSSI measurement mode). The data received by the RF chip 58 is processed by the analog-to-digital converter (A/D) 70 and digital signal processor 80. In fast receive mode, the DSP provides an RSSI measurement based on the sampling whereas in the normal receive mode, the DSP receives digital TDMA data for standard digital signal processing. The main components of the RF chip 58 are shown schematically in FIG. 13. The RF transceiver 58 comprises both a receiver 58r and its respective antenna 57r and a transmitter 58t and its respective antenna 57t. The transmitter and receiver have a local oscillator (LO) 59 including a PLL. When the processor instructs the RF chip to enter fast receive mode, sampling begins prior to complete stabilization of the PLL in the LO 59. This enables RSSI measurements to be scheduled in the available space in a given timeslot, thereby enabling the device to handle higher multislot classes.

For the purposes of the present specification, "GSM" is meant to include any of the GSM/UMTS family of mobile communication standards. However, it should be appreciated that the technology described herein can be applied, mutatis mutandis, to other TDMA-based mobile communication systems.

This new technology has been described in terms of specific implementations and configurations which are intended to be exemplary only. The scope of the exclusive right sought by the Applicant is therefore intended to be limited solely by the appended claims.
According to an aspect of the invention there is provided a method of transmitting and receiving data using a wireless communications device that is enabled for higher multislot classes in which a plurality of uplink timeslots of each time division multiple access 'TDMA' frame is reserved for transmitting data and a plurality of downlink timeslots of each TDMA frame is reserved for receiving data, the method comprising steps of: receiving TDMA data on at least one of the plurality of downlink timeslots reserved for receiving data; switching a transceiver of the wireless communications device from a receiver mode to a transmitter mode; transmitting TDMA data on at least one of the plurality of uplink timeslots reserved for transmitting data; switching the transceiver of the wireless communications device from the transmitter mode to the receiver mode; and measuring, with the transceiver operating in the receiver mode, a received signal strength indication 'RSSI' by initiating collection of RSSI signal samples prior to complete stabilization of a phase-locked loop `PLL' of the transceiver.
Optionally, the step of switching the transceiver from the receiver mode to the transmitter mode comprises steps of: terminating the receiver mode; programming the transceiver for the transmitter mode; and stabilizing the PLL for the transmitter mode.
Optionally, the step of switching the transceiver from the transmitter mode to the receiver mode comprises steps of: terminating the transmitter mode; programming the transceiver for the receiver mode; and stabilizing the PLL for the receiver mode.
Optionally, the step of measuring the received signal strength indication 'RSSI' comprises steps of: programming the transceiver for the receiver mode; initiating stabilization of the PLL; initiating collection of RSSI signal samples while the PLL is still stabilizing; and terminating the receiver mode when a maximum number of RSSI signal samples has been collected, wherein the maximum number of RSSI signal samples is constrained by a remaining space available in a timeslot during which the RSSI is to be measured.
Optionally, the step of measuring the received signal strength indication `RSSI' comprises initiating collection of RSSI signal samples once the phase-locked loop has stabilized the frequency of a local oscillator to within 20 kHz of the carrier frequency.
Optionally, the step of measuring the received signal strength indication 'RSSI' comprises collecting x samples representing 4x qbits where x = ((625 qbits per timeslot) - (time required for switching from the transmitter mode to the receiver mode or from the receiver mode to the transmitter mode) - (time to program the transceiver for RSSI measurement in the receiver mode) - (time to stabilize the PLL to within 20 kHz of the carrier frequency) - (time to terminate the receiver mode once RSSI measurement is complete))/4.
Optionally, the TDMA frame has eight timeslots of which at least six timeslots are reserved for either data transmission or data reception.
Optionally, the TDMA frame has eight timeslots of which at least seven timeslots are reserved for either data transmission or data reception.
According to another aspect the invention provides a computer program product comprising code which when loaded into memory and executed on a processor of a wireless communications device is adapted to configure a radiofrequency transceiver of the wireless communications device to perform steps of the above-mentioned method. According to another aspect the invention provides a wireless communications device enabled for higher multislot classes in which a plurality of uplink timeslots of each time division multiple access 'TDMA' frame is reserved for transmitting data and a plurality of downlink timeslots of each TDMA frame is reserved for receiving data, the device comprising: a radiofrequency transceiver having a phase-locked loop for locking the phase of a local oscillator of the transceiver to the phase of a carrier signal; and a processor for instructing the radiofrequency transceiver to switch between a normal data-receiving mode in which TDMA data is received on reserved downlink slots and a dedicated RSSI-measurement mode for measuring a received signal strength indication 'RSSI' wherein collection of RSSI signal strength samples is initiated prior to complete stabilization of the phase-locked loop.
Optionally, the processor is configured to initiate collection of RSSI signal strength samples when the PLL has stabilized to within 20 kHz of the carrier frequency.
Optionally, each TDMA frame has eight timeslots of which at least six timeslots are reserved for either data transmission or data reception.
Optionally, the radiofrequency transmitter operates at a lower power when operating in the dedicated RSSI measurement mode.
Optionally, a time lag between initiation of stabilization and initiation of sample collection is a configurable parameter.
Optionally, the processor is configured to cause the radiofrequency transceiver to collect a maximum number of RSSI signal samples, where the maximum number is constrained by the remaining space available in a timeslot during which RSSI is measured.

## Claims

1. A method of operating a wireless communications device (50), the method comprising:
switching a transceiver of the wireless communications device (50) to a receiver mode; and
measuring, with the transceiver operating in the receiver mode, a received signal strength indicator 'RSSI' by initiating collection of RSSI signal samples prior to complete stabilization of a phase-locked loop 'PLL' of the transceiver.

2. The method of claim 1 wherein switching the transceiver to the receiver mode comprises:
terminating a transmitter mode;
programming the transceiver for the receiver mode; and
stabilizing the PLL for the receiver mode.

3. The method of claim 2 wherein measuring the received signal strength indication comprises:
initiating (520) stabilization of the PLL (59);
initiating (530) collection of RSSI signal samples while the PLL (59) is still stabilizing; and
terminating (540) the receiver mode when a maximum number of RSSI signal samples has been collected, wherein the maximum number of RSSI signal samples is constrained by a remaining space available in a timeslot during which the RSSI is to be measured.

4. The method of claim 2 wherein measuring the received signal strength indication comprises collecting x samples representing 4x qbits where x = ((625 qbits per timeslot) - (time required for switching from the transmitter mode to the receiver mode or from the receiver mode to the transmitter mode) - (time to program the transceiver for RSSI measurement in the receiver mode) - (time to stabilize the PLL to within 20 kHz of the carrier frequency) - (time to terminate the receiver mode once RSSI measurement is complete))/4.

5. The method of any one of claims 1 to 4 comprising:
reserving a plurality of uplink timeslots of a time division multiple access 'TDMA' frame for transmitting data;
reserving a plurality of downlink timeslots of the TDMA frame for receiving data; and
wherein at least six timeslots are reserved for either data transmission or data reception.

6. The method of any one of claims 1 to 4 comprising:
reserving a plurality of uplink timeslots of a time division multiple access 'TDMA' frame for transmitting data;
reserving a plurality of downlink timeslots of the TDMA frame for receiving data; and
wherein at least seven timeslots are reserved for either data transmission or data reception.

7. A computer readable medium comprising code which when loaded into memory (54, 56) and executed on a processor (52) of a wireless communications device (50) is adapted to configure a radiofrequency transceiver (58) of the wireless communications device (50) to perform steps of the method of any one of the preceding claims.

8. A wireless communications device (50) comprising:
a radiofrequency transceiver (58) having a phase-locked loop (59) for locking the phase of a local oscillator of the transceiver (58) to the phase of a carrier signal; and
a processor (52) for instructing the radiofrequency transceiver (58) to switch to a receiver mode and for measuring, with the transceiver operating in the receiver mode, a received signal strength indicator 'RSSI' by initiating collection of RSSI signal samples prior to complete stabilization of a phase-locked loop 'PLL' (59) of the transceiver (58).

9. The wireless communications device (50) as claimed in claim 8 wherein the processor (52) is configured to initiate collection of RSSI signal strength samples when the PLL (59) has stabilized beyond a predetermined threshold.

10. The wireless communications device (50) as claimed in claim 8 or claim 9 wherein the processor (52) is configured to initiate collection of RSSI signal strength samples when the PLL (59) has stabilized to within 20 kHz of a carrier frequency.

11. The wireless communications device (50) as claimed in any one of claims 8 to 10 wherein the radiofrequency transceiver (58) is configured to reserve uplink timeslots of a time division multiple access 'TDMA' frame for transmitting data and to reserve a plurality of downlink timeslots of the TDMA frame for receiving data and wherein the TDMA frame has eight timeslots of which at least six timeslots are reserved for either data transmission or data reception.

12. The wireless communications device (50) as claimed in any one of claims 8 to 11 wherein the radiofrequency transmitter operates (58) at a lower power when measuring the RSSI.

13. The wireless communications device (50) as claimed in any one of claims 8 to 12 wherein the processor (52) is configured to cause the radiofrequency transceiver (58) to collect a maximum number of RSSI signal samples, where the maximum number is constrained by a remaining space available in a timeslot during which RSSI is measured.

## Patentansprüche

1. Ein Verfahren zum Betreiben einer drahtlosen Kommunikationsvorrichtung (50), wobei das Verfahren aufweist:
Schalten eines Transceivers der drahtlosen Kommunikationsvorrichtung (50) in einen Empfänger-Modus; und
Messen, mit dem in dem Empfänger-Modus arbeitenden Transceiver, eines Empfangssignalstärke-Indikators (RSSI - received signal strength indicator) durch Initiieren einer Sammlung von RSSI-Signalabtastwerten vor einer vollständigen Stabilisierung eines Phasenregelkreises (PLL - phase-locked loop) des Transceivers.

2. Das Verfahren gemäß Anspruch 1, wobei das Umschalten des Transceivers in den Empfänger-Modus aufweist:
Beenden eines Sender-Modus;
Programmieren des Transceivers für den Empfänger-Modus; und
Stabilisieren des PLLs für den Empfänger-Modus.

3. Das Verfahren gemäß Anspruch 2, wobei das Messen der Empfangssignalstärke-Angabe aufweist:
Initiieren (520) einer Stabilisierung des PLLs (59);
Initiieren (530) einer Sammlung von RSSI-Signalabtastwerten, während der PLL (59) weiterhin stabilisiert; und
Beenden (540) des Empfänger-Modus, wenn eine maximale Anzahl von RSSI-Signalabtastwerten gesammelt wurde, wobei die maximale Anzahl von RSSI-Signalabtastwerten durch einen verbleibenden Platz beschränkt ist, der in einem Zeitschlitz verfügbar ist, während dem der RSSI zu messen ist.

4. Das Verfahren gemäß Anspruch 2, wobei das Messen der Empfangssignalstärke-Angabe aufweist ein Sammeln von x Abtastwerten, die 4x qbits repräsentieren, wobei x = ((625 qbits pro Zeitschlitz) - (erforderliche Zeit zum Umschalten von dem Sender-Modus in den Empfänger-Modus oder von dem Empfänger-Modus in den Sender-Modus) - (Zeit zum Programmieren des Transceivers für eine RSSI-Messung in dem Empfänger-Modus) - (Zeit zum Stabilisieren des PLLs auf innerhalb 20 kHz der Trägerfrequenz) - (Zeit zum Beenden des Empfänger-Modus, sobald eine RSSI-Messung vollständig ist))/4.

5. Das Verfahren gemäß einem der Ansprüche 1 bis 4, das aufweist:
Reservieren einer Vielzahl von Uplink-Zeitschlitzen eines TDMA(time division multiple access)-Rahmens zum Senden von Daten;
Reservieren einer Vielzahl von Downlink-Zeitschlitzen des TDMA-Rahmens zum Empfangen von Daten; und
wobei zumindest sechs Zeitschlitze für entweder Datenübertragung oder Datenempfang reserviert sind.

6. Das Verfahren gemäß einem der Ansprüche 1 bis 4, das aufweist:
Reservieren einer Vielzahl von Uplink-Zeitschlitzen eines TDMA(time division multiple access)-Rahmens zum Senden von Daten;
Reservieren einer Vielzahl von Downlink-Zeitschlitzen des TDMA-Rahmens zum Empfangen von Daten; und
wobei zumindest sieben Zeitschlitze für entweder Datenübertragung oder Datenempfang reserviert sind.

7. Ein computerlesbares Medium, das Code aufweist, der bei einem Laden in einen Speicher (54, 56) und einem Ausführen auf einem Prozessor (52) einer drahtlosen Kommunikationsvorrichtung (50) ausgebildet ist zum Konfigurieren eines Funkfrequenz-Transceivers (58) der drahtlosen Kommunikationsvorrichtung (50), Schritte des Verfahrens gemäß einem der vorhergehenden Ansprüche durchzuführen.

8. Eine drahtlose Kommunikationsvorrichtung (50), die aufweist:
einen Funkfrequenz-Transceiver (58) mit einem Phasenregelkreis (PLL - phase-locked loop) (59) zum Fixieren der Phase eines lokalen Oszillators des Transceivers (58) mit der Phase eines Trägersignals; und
einen Prozessor (52) zum Anweisen des Funkfrequenz-Transceivers (58), in einen Empfänger-Modus zu schalten, und zum Messen, mit dem in dem Empfänger-Modus arbeitenden Transceiver, eines Empfangssignalstärke-Indikators (RSSI - received signal strength indicator) durch Initiieren einer Sammlung von RSSI-Signalabtastwerten vor einer vollständigen Stabilisierung eines Phasenregelkreises (PLL - phase-locked loop) (59) des Transceivers (58).

9. Die drahtlose Kommunikationsvorrichtung (50) gemäß Anspruch 8, wobei der Prozessor (52) konfiguriert ist zum Initiieren einer Sammlung von RSSI-Signalabtastwerten, wenn der PLL (59) über einen vorgegeben Schwellenwert stabilisiert ist.

10. Die drahtlose Kommunikationsvorrichtung (50) gemäß Anspruch 8 oder Anspruch 9, wobei der Prozessor (52) konfiguriert ist zum Initiieren einer Sammlung von RSSI-Signalabtastwerten, wenn der PLL (59) auf innerhalb 20 kHz einer Trägerfrequenz stabilisiert ist.

11. Die drahtlose Kommunikationsvorrichtung (50) gemäß einem der Ansprüche 8 bis 10, wobei der Funkfrequenz-Transceiver (58) konfiguriert ist zum Reservieren von Uplink-Zeitschlitzen eines TDMA(time division multiple access)-Rahmens zum Senden von Daten und zum Reservieren einer Vielzahl von Downlink-Zeitschlitzen des TDMA-Rahmens zum Empfangen von Daten und wobei der TDMA-Rahmen acht Zeitschlitze hat, von denen zumindest sechs Zeitschlitze für entweder Datenübertragung oder Datenempfang reserviert sind.

12. Die drahtlose Kommunikationsvorrichtung (50) gemäß einem der Ansprüche 8 bis 11, wobei der Funkfrequenz-Sender (58) während eines Messens des RSSIs mit einer geringeren Leistung arbeitet.

13. Die drahtlose Kommunikationsvorrichtung (50) gemäß einem der Ansprüche 8 bis 12, wobei der Prozessor (52) konfiguriert ist, den Funkfrequenz-Transceiver (58) zu veranlassen, eine maximale Anzahl von RSSI-Signalabtastwerten zu sammeln, wobei die maximale Anzahl durch einen verbleibenden Platz beschränkt ist, der in einem Zeitschlitz verfügbar ist, während dem der RSSI gemessen wird.

## Revendications

1. Procédé de fonctionnement d'un dispositif de communication sans fil (50), le procédé comprenant les étapes consistant à :
commuter en mode de réception un émetteur-récepteur du dispositif de communication sans fil (50) ; et
à l'aide de l'émetteur-récepteur fonctionnant en mode de réception, mesurer un indicateur d'intensité de signal reçu, RSSI pour « *Received Signal Strength Indicator* », en lançant la collecte d'échantillons du signal RSSI avant la stabilisation complète d'une boucle verrouillée en phase, PLL pour « *Phase Locked Loop* », de l'émetteur-récepteur.

2. Procédé selon la revendication 1, dans lequel l'étape de commutation de l'émetteur-récepteur en mode de réception comprend les étapes consistant à :
terminer un mode d'émission ;
programmer l'émetteur-récepteur pour le mode de réception ; et
stabiliser la boucle PLL pour le mode de réception.

3. Procédé selon la revendication 2, dans lequel l'étape de mesure de l'indication d'intensité du signal reçu comprend les étapes consistant à :
lancer (520) la stabilisation de la boucle PLL (59) ;
lancer (530) la collecte des échantillons du signal RSSI alors que la boucle PLL (59) est toujours en cours de stabilisation ; et
terminer (540) le mode de réception lorsqu'un nombre maximal d'échantillons du signal RSSI a été collecté, le nombre maximal des échantillons du signal RSSI étant contraint par un espace résiduel disponible dans un créneau temporel pendant lequel l'indicateur RSSI doit être mesuré.

4. Procédé selon la revendication 2, dans lequel l'étape de mesure de l'indication d'intensité du signal reçu comprend l'étape consistant à collecter x échantillons représentant 4 x qbits, où x = ((625 qbits par créneau temporel) - (temps nécessaire pour commuter entre le mode d'émission et le mode de réception ou entre le mode de réception et le mode d'émission) - (temps de programmation de l'émetteur-récepteur pour la mesure de l'intensité RSSI dans le mode de réception)
- (temps de stabilisation de la boucle PLL dans la limite de 20 kHz de la fréquence porteuse) - (temps de terminaison du mode de réception lorsque la mesure de l'intensité RSSI est achevée)) / 4.

5. Procédé selon l'une quelconque des revendications 1 à 4, comprenant les étapes consistant à :
réserver une pluralité de créneaux temporels montants d'une trame d'accès multiple par répartition dans le temps, TDMA pour « *Time Division Multiple Access* », pour l'émission de données ;
réserver une pluralité de créneaux temporels descendants de la trame TDMA pour la réception de données ; et
dans lequel au moins six créneaux temporels sont réservés pour l'émission de données ou la réception de données.

6. Procédé selon l'une quelconque des revendications 1 à 4, comprenant les étapes consistant à :
réserver une pluralité de créneaux temporels montants d'une trame d'accès multiple par répartition dans le temps, TDMA pour « *Time Division Multiple Access* », pour l'émission de données ;
réserver une pluralité de créneaux temporels descendants de la trame TDMA pour la réception de données ; et
dans lequel au moins sept créneaux temporels sont réservés pour l'émission de données ou la réception de données.

7. Support lisible par ordinateur comprenant du code qui, lorsqu'il est chargé en mémoire (54, 56) et exécuté sur un processeur (52) d'un dispositif de communication sans fil (50), est conçu pour configurer un émetteur-récepteur de radiofréquences (58) du dispositif de communication sans fil (50) afin d'exécuter des étapes du procédé selon l'une quelconque des revendications précédentes.

8. Dispositif de communication sans fil (50) comprenant :
un émetteur-récepteur de radiofréquences (58) ayant une boucle verrouillée en phase (59) afin de verrouiller la phase d'un oscillateur local de l'émetteur-récepteur (58) sur la phase d'un signal de porteuse ; et
un processeur (52) destiné à ordonner à l'émetteur-récepteur de radiofréquences (58) de commuter en mode de réception et, alors que l'émetteur-récepteur fonctionne en mode de réception, de mesurer un indicateur d'intensité de signal reçu, RSSI pour *« Received Signal Strength Indicator* », en lançant la collecte d'échantillons du signal RSSI avant la stabilisation complète d'une boucle verrouillée en phase, PLL pour « *Phase Locked Loop* », de l'émetteur-récepteur (58).

9. Dispositif de communication sans fil (50) selon la revendication 8, dans lequel le processeur (52) est configuré pour lancer la collecte des échantillons d'intensité du signal RSSI lorsque la boucle PLL (59) s'est stabilisée au-delà d'un seuil prédéterminé.

10. Dispositif de communication sans fil (50) selon la revendication 8 ou la revendication 9, dans lequel le processeur (52) est configuré pour lancer la collecte des échantillons d'intensité du signal RSSI lorsque la boucle PLL (59) s'est stabilisée dans la limite de 20 kHz d'une fréquence porteuse.

11. Dispositif de communication sans fil (50) selon l'une quelconque des revendications 8 à 10, dans lequel l'émetteur-récepteur de radiofréquences (58) est configuré pour réserver une pluralité de créneaux temporels montants d'une trame d'accès multiple par répartition dans le temps, TDMA pour « *Time Division Multiple Access* », pour l'émission de données et pour réserver une pluralité de créneaux temporels descendants de la trame TDMA pour la réception de données et dans lequel la trame TDMA compte huit créneaux temporels dont au moins six créneaux temporels sont réservés pour l'émission de données ou la réception de données.

12. Dispositif de communication sans fil (50) selon l'une quelconque des revendications 8 à 11, dans lequel l'émetteur-récepteur de radiofréquences (58) fonctionne avec une consommation réduite lorsqu'il mesure l'indicateur RSSI.

13. Dispositif de communication sans fil (50) selon l'une quelconque des revendications 8 à 12, dans lequel le processeur (52) est configuré pour commander à l'émetteur-récepteur de radiofréquences (58) de collecter un nombre maximal d'échantillons du signal RSSI, le nombre maximal étant contraint par l'espace résiduel disponible dans un créneau temporel pendant lequel l'indicateur RSSI est mesuré.
